# EUROPEAN PATENT SPECIFICATION

(11) **EP 1 409 110 B1**
(45) Date of publication and mention of the grant of the patent: **08.10.2008**
(21) Application number: 00982534.0
(22) Date of filing: 08.12.2000
(51) Int. Cl.: B01D 46/00

(54) **CLEAN ROOM CEILING FILTER UNIT SUPPORT SYSTEM**
STÜTZSYSTEM FÜR REINRAUMDECKENFILTER
SYSTEME DE SUPPORT D'UNITE DE FILTRATION POUR PLAFOND DE SALLE BLANCHE

(30) Priority: 07.12.2000 US 254332 P
(43) Date of publication of application: 21.04.2004
(73) Proprietor: Hepa Corporation, Anaheim, CA 92806 (US)
(72) Inventor: GOMEZ, Tony, Anaheim, CA 92806 (US); JEANSEAU, Peter, San Clemente, CA 92672 (US)
(74) Representative: Patentanwälte Zellentin & Partner
(86) International application number: PCT/US2000/033332
(87) International publication number: WO 2002/045818

(56) References cited:
- US-A- 3 782 082
- US-A- 4 217 122
- US-A- 5 346 425
- US-A- 5 613 759
- US-A- 5 733 348
- US-A- 5 865 674
- US-A- 5 944 602
- US-A- 5 993 311
- US-A- 5 993 519
- US-A- 6 070 383
- US-B1- 6 183 528
- US-B1- 6 190 431

## Description

### Background of the Invention

### 1. Field of the Invention

This invention relates to clean room systems and, in particular, clean room ceiling systems. "Ceiling" herein includes not only horizontal upper walls and lower walls or floors of rooms but also vertical side walls. The terms lower, upper, above, below, and the like and their cognitives have reference to a conventional ceiling installation and are to be understood as relative terms when the"ceiling"is other than above the workspace.

### 2. Related Art

Clean room ceilings are known and typically comprise one or more filter units supported by a structure that is separate or integral with the filter units. Facile installation and removal of the filter units, which are replaced from time-to-time, is of increasing importance. Replacement from the room side of the filter system is desirable for increased convenience and lower cost. The need to air-tightly mount the filter units in their filter support structure has lead to the use of supports that have flanges or lips against which the filter units rest in sealed condition. US 3,782,082 describes a filter unit support system comprising frames fixed to the ceiling and having downwardly extending sides of generally Z-shaped cross section that include an inwardly expending lip with a lower end that defines snap receiving means. The filter unit frames comprise snap means for engaging with the snap receiving means. The snap connection is provided with a soft pliable gasket for tightening. The snap means are made by bending the edges of the filter unit frame, so that the upper end portion rests on the inwardly extending lip. Passing the flanges or lips to insert filter units can be problematic. More recently, it has been demonstrated that sealing tape can be used at the interstices of the filter arrays to block unfiltered air flow, eliminating in some systems the use of support flanges, and easing the insertion problem.

### Summary of the Invention

The invention relates to filter units comprising a frame and filter media sealed in the frame, support structure comprising a support such as a grid or other array of support elements, or a filter unit receiver of one or more interconnected modular bays congruent and close-fitting with the filter units, and cooperating fasteners including plural spring-loaded latch and keeper fasteners with latches moving in a plane parallel to the filter unit side for separably attaching the filter units into the support structure with a simple push-in, pull-out movement.

Mounting the filter units in their support structure directly, easily and without tilting is desirable, and can now be achieved with a filter unit mounting system that reacts to the presence of the filter. Desirably such a system also permits the separation of the filter unit from the support readily and from the room side.

### Brief Description of the Drawings

The invention will be further described in conjunction with the attached drawings in which:
Fig. 1 is an oblique view of the invention clean room ceiling with the filter separated to show the fasteners;
Fig. 2 is an exploded view of the invention filter unit and receiving unit support structure.
Fig. 3A is a fragmentary detail view in elevation of the filter unit side with attached pivoting latch in pin engagement;
Fig. 3B is a view like Fig. 3A with the attached pivoting latch pivoted away from the pin;
Fig. 3C is a fragmentary detail view in elevation of the filter unit and the support structure, the latches on each side being tethered together with a common tether;
Fig. 4 is a bottom plan view of the filter unit and support in assembled condition as typically viewed from the workspace;
Fig. 5A is a side elevation view, partly in section, of the filter unit equipped with a damper and damper adjustment features;
Fig. 5B is a fragmentary, detail view of the filter unit damper and damper adjustment features; and,
Fig. 6 is a side elevation view, partly in section, of the filter unit being used to introduce test material into the air flow.

### Description of the Preferred Embodiments

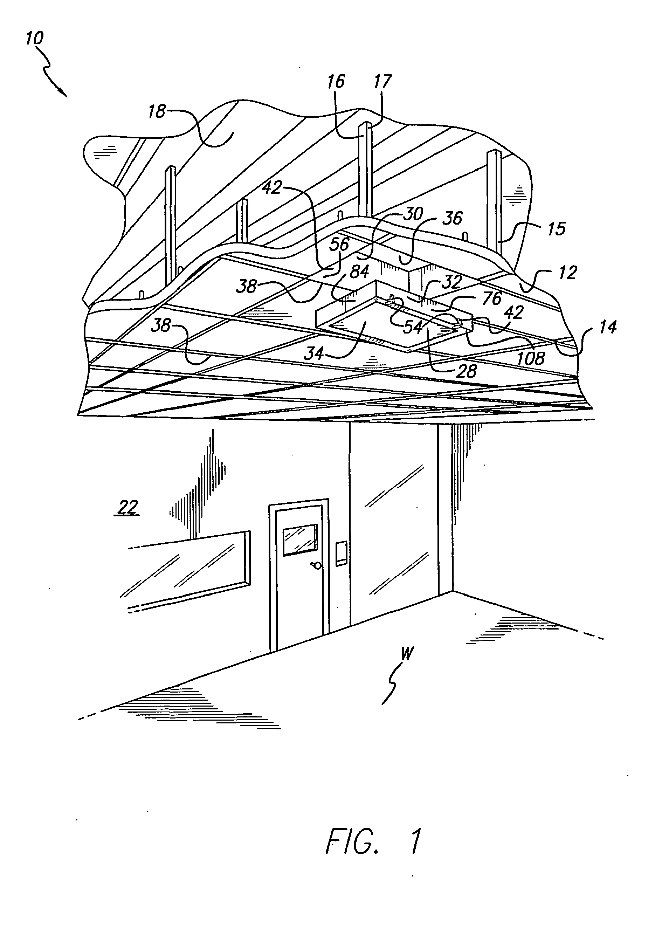

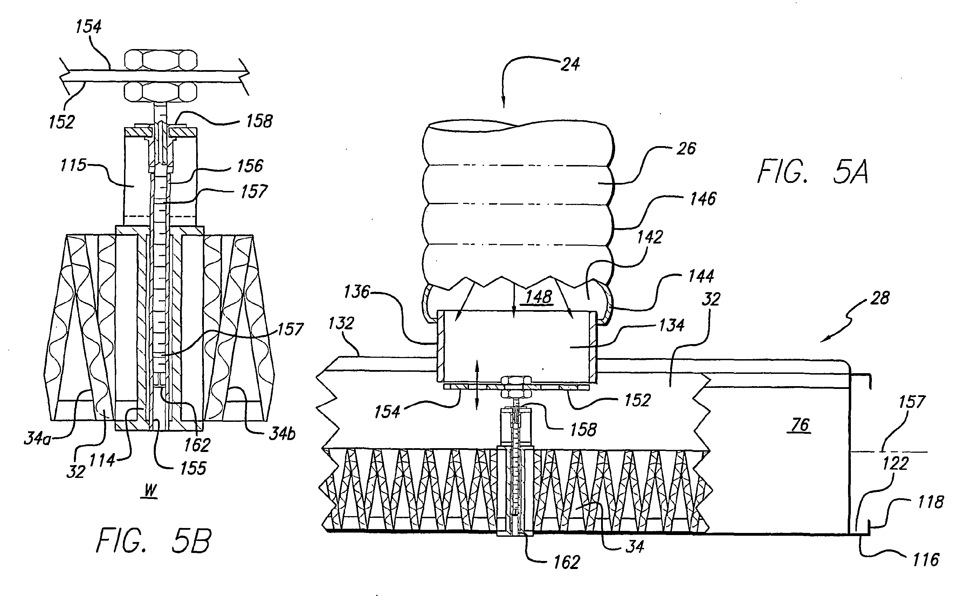

With reference now to the drawings in detail, in Figs. 1 and 5A a first illustrative embodiment of the invention has the invention clean room ceiling system generally indicated at 10. The system 10 comprises a dropped ceiling 12 of horizontally disposed and laterally and longitudinally extended filter unit support 14 including support structures 30 carried at the lower ends 15 of vertically disposed hangers 16 that are attached at their opposite upper ends 17 to the room true ceiling 18. Any other suitable form of vertical or horizontal support can be used. The filter unit support structures 30 are arranged to overlie the closed space room 22 and the workspace W therein. The function of the ceiling system 10 is to introduce HEPA or UPLA standard air or other highly filtered air to workspace W, the air being typically received for filtering from an air supply 24 indicated by flexible conduit 26 (Fig. 5).

The clean room ceiling system 10 further includes one or a plurality of filter units 28 that have a predetermined shape, here shown as rectangular, and that comprise a frame 32 and filter media 34 sealed within the frame. The filter unit support structures 30 are congruent with and closely fit with the adjacent filter unit frames 32 so as to support the filter units 28 to one side of the workspace W.

In one aspect the invention provides a rapid-acting, secure, and easily reversed, superior form of mounting attachment of the filter units 28 to the filter unit support 14.

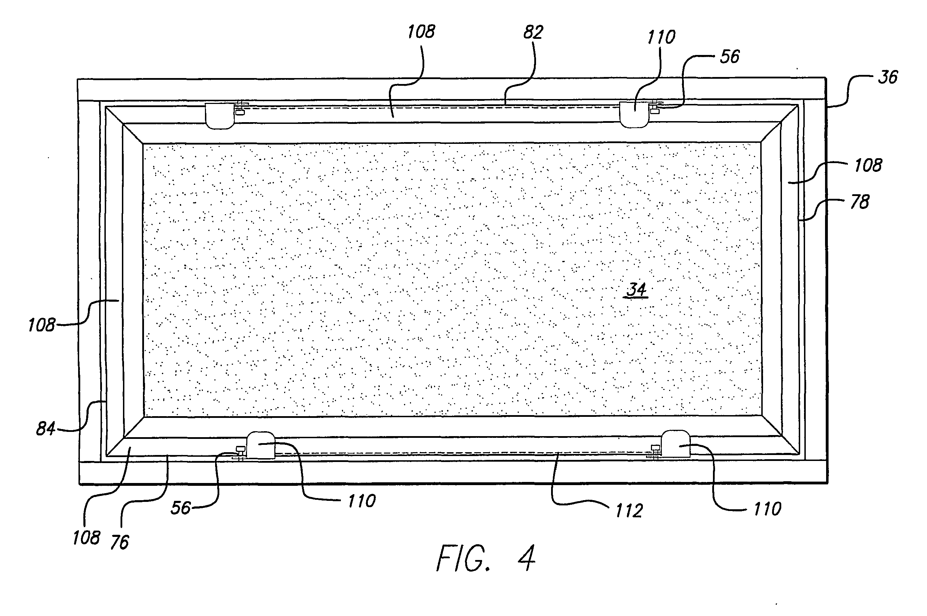

As particularly shown in Figs. 1-4, the filter unit support 14 includes individual or gridarranged support structures 30 typically comprising a housing or receiver 36 that defines a receptacle or a series of receptacles 38 for receiving and mounting the individual filter units 28, plural sets of paired cooperating latch and keeper fasteners 42 carried by the filter unit frame 32 and the filter unit support receivers 36. The fasteners 42 comprise opposed (and inregisterable relation) pairings 44,46,48,52 to function as an assembly of a latch 54 and a pin 56.

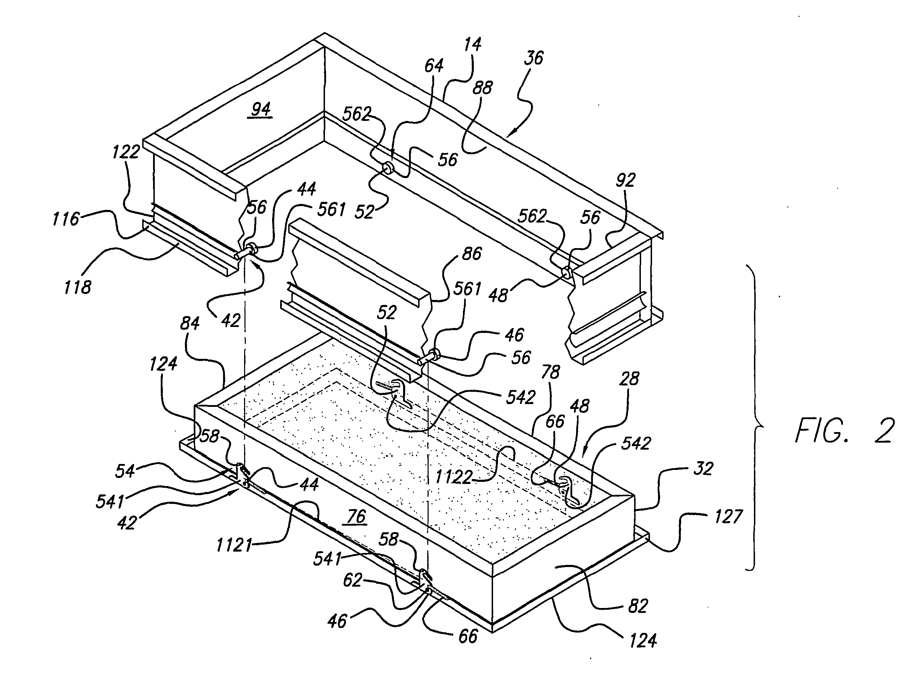

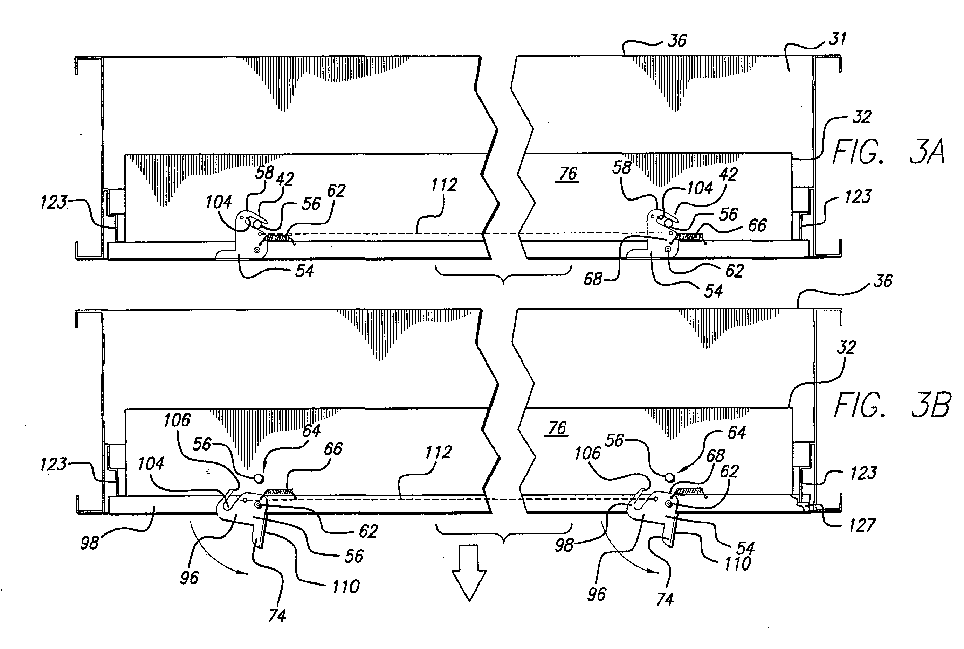

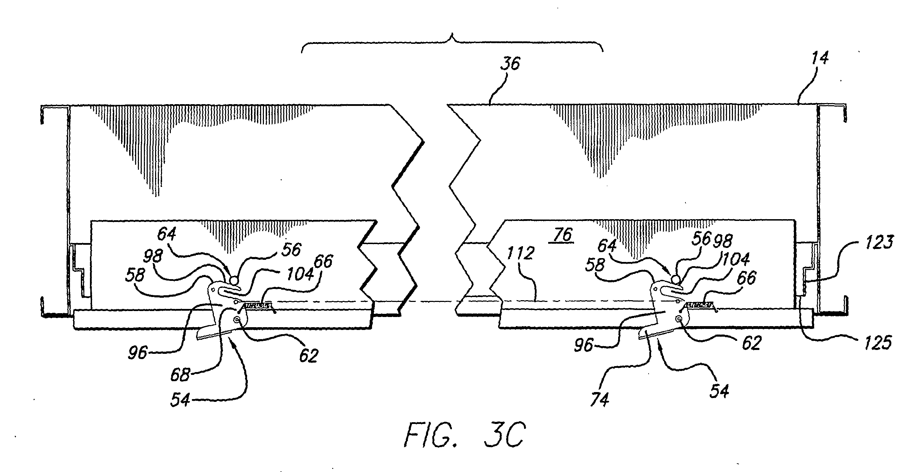

With reference to Figs. 3A, 3B and 3C, each latch 54 (shown closed in Fig. 3C), has a leading shoulder 58 by which the latch is deflectable in pivoting relation on pivot 62. Pivoting is caused by cooperating keeper 64 shown in the form of pin 56. Upon engagement of the keeper pin 56 with the latch leading shoulder 58, the latch pivots so as to pass the keeper pin (see Figs. 2,3A and 3C). Tension spring 66 biases each latch 54 against the keeper pin 56-caused deflection. Tension spring 66 is coupled between latch portion 68 and the filter unit frame 32 so as to be adjacent to and offset from the pivot locus 62. Thusly mounted, the spring 66 tends to keep the latch engaged with cooperating keeper pin 56. Each latch 54 by virtue of its mounting and spring-loading as described is adapted to return to an undeflected position (Figs. 2,3A) in keeper pin 56-engaged relation to block separation of the filter unit 28 from the filter unit support receiver 36 after the latch passes the keeper pin.

The latch 54 further has a trailing shoulder structure indicated at 74 by which the latch is reversely deflectable to disengage from the keeper pin 56. Preferably reverse deflection is effected from outside the filter unit support receiver 36 as hereinafter set forth. The reverse deflection of the latch 54, suitably from within the workspace W, releases the filter unit 28 from the filter unit support receiver 36 and permits lowering of the filter units 28 from the support receivers 36.

In the embodiment shown in Figs. 1-4, the filter unit frame 32 defines four outward facing sides 76, 78, 82 and 84. Preferably two, but as many as four of the sides 76 - 84 carry one or more latches 54 (or keeper pins 56) each in latching relation with a mating keeper (or latch) respectively carried by the filter unit support receiver 36. A filter unit support receiver 36 is disposed circumjacent to each filter unit frame 32. Each receiver 36 has four inward facing sides 86, 88, 92, 94 corresponding to the four outward facing sides 76 - 84 of the filter unit 28, the inward facing sides being arranged to be opposite each of the respective filter unit outwardly facing (latch 54 or keeper pin 56-carrying) sides. Thus, at least two but as many as four the filter unit support receiver inward facing sides 86 - 94 carry one or more keeper pins 36 (or latches 54) in latching relation with a latch (or keeper) carried by the filter unit receiver outward facing sides 76 - 84 in latch registerable relation.

Preferably, oppositely facing, longer sides 76, 78 of the filter unit frame 32 each carry a pair or set of spring-loaded latches 54. The keeper pins 56 project into the receiver interior 37 and extend normal to the receiver inward facing sides 86, 88 to oppose the latch shoulders 58. Each latch 54 is mounted (at pivot 62) to its respective outward facing side so as to pivot in a plane parallel to the filter unit side (76, 78) carrying the latch. Latch leading shoulder 58 contacts the opposing keeper pin 56 at a point on the shoulder 58 that will deflect the shoulder away from the pin 56, and cause the latch to pivot.

Each latch 54 is preferably hook-shaped, having a body portion 96 that is pivoted at pivot 62, an arm portion 98 extending from the body portion. Arm portion 98 defines the latch leading shoulder 58. Arm portion 98 is spaced from the latch body portion 96 a small distance so as to define a keeper pin 56-receiving slot 104 that travels arcuately upon rotating deflection of the latch 54. Arm portion 98 in a deflected orientation or condition is arranged and sized to pass the keeper pin 56, and to engage the keeper pin 56 by receiving the pin in slot 104 in the non-deflected orientation or condition of the latch 54 and its arm portion, as shown in Fig. 3A.

Arm leading shoulder 58 has a cam-shape, as shown, with its axis of revolution offset from the pivot 62, or any other shape that will rotatingly drive the latch 54 about its pivot locus when the shoulder is engaged with the keeper pin 56. The curvature of leading shoulder 58 is such that contact of the leading shoulder with the keeper pin 56 tips the latch in a manner to position the slot mouth 106 for entry of the keeper pin 56 into slot 104.

Each of the filter unit sides 76 - 84 has a front face 108 that extends normal to the sides and faces the workspace W. Each latch 54 preferably has, in the illustrated embodiment, a flange 110 extending at a right angle from the trailing shoulder 74 of latch body portion 96. Flange 110 separably engages the side front face 108 and serves to block overrotation of the latch 54 under the biasing force of spring 66, and as well provides a finger hold for rotating the latch from within the workspace W.

For purposes of facilitating the reverse rotation together of each latch 54 to disengage the latches from keeper pins 56, the latches are preferably connected with a link bar or cable shown as tether 112. Tethers 112 are suitably secured to latch portion 68 and are of a length and arrangement suitable for simultaneously pivoting two or more of the latches 54 in a set from their pin 56 engagement. The tether 112 is actuated by rotation of one of the coupled latches 54 by its flange 110 accessible from within the workspace W so that the reversal of the filter unit 28 latching is readily effected by pulling the room-exposed flange 110 on one of the latches and thereby simultaneously shifting from pin 56 engagement the other latch or latches coupled by the tether 112 to the one latch.

In the arrangement shown, the separate latches in each set or pair of latches 541, 542 on each filter unit frame side, e.g. 76, 78 are connected together by a common tether 112. Alternatively, all latches in a given set of latches for a filter unit 28 or a receiver 36 can be connected with a single tether 112. In each arrangement, it is desirable to provide for sufficient simultaneity of latch actuation by tether 112 that the filter unit 28 is smoothly and predictably released from its receiver 36. The coupling of several latches 54 with a common tether 112 enables a single worker to release and control the filter unit 28 in removing it from the receiver 36 and thus provides a more economical arrangement than systems requiring two or more workers to handle the filter unit removal.

In summary, the present embodiment filter unit frame 32 is rectangular and has first and second pairs of outwardly facing sides 76, 78 having respectively first and second sets of pivoting latches 541, 542 mounted thereon in longitudinally distributed relation along the long axis of the sides. The filter unit support 14 includes first and second sets of keeper pins 561,562 also longitudinally distributed and mounted in cooperating relation with the first and second sets of latches 541,542. First and second tethers 1121,1122 separately connect the first and second sets of latches 541,542 respectively for pivoting together latches 541 or 542 within each set in pin 56 separating relation.

The filter unit support structure sides 86,88,92 and 94 each have an external Ushaped flange 116 comprising a stub wall 118 extending parallel to the structure side and spaced therefrom across a narrow gap 122. The support structures may also include an internal flange 123 having a knife edge 125 (Fig. 3C) for sealing purposes as explained below. The keeper pin 56 is supported in place by the structure side e. g. 86 and suitably also by the stub wall 118 in gap 122 traversing relation.

The filter unit sides 76,78,82 and 84 also have an external U-shaped flange 124 that isperimetrically sized to fit within the filter unit support receiver 36 and shaped as shown to receive the support structure internal flange 123. The flange 124 contains a fluid or solid sealant 127 that is suitably known per se such as a neoprene or other material sealing gasket or a sealing gel for sealing the filter unit 28 to the receiver 36 as the flange knife-edge 125 seals against the sealant. Or the sealing of these parts may be by a sealing bead or tape at their locus of abutment. See, for example USP 5,871,556 to Jeanseau and Braman.

Filter unit flange 124 also supports the latch sets 541,542 by supporting the pivot pin 62 on which the latch bodies 96 rotate. The invention thus provides a unique filter unit 28 for use in clean room ceiling systems comprising a filter unit 28 for mounting in a support 30 supported by a support surface 18. The filter unit has a frame 32 with outwardly facing side walls 76-84 and filter media 34 permanently or replaceably sealed within the frame. The filter unit side walls 76,78 support cooperating fasteners comprising latches 54 and keeper pins 56 that are adapted to support the filter unit 28 at the support 30 and spaced from the support surface 18.

In this aspect, the invention method includes maintaining the filter unit 28 and filter unit support structure 30 in air filtering relation to workspace W within clean room 22, coupling the filter unit to the support structure with cooperating latch 54 and keeper pin 56 by deflection of the latch upon contact with the keeper to pass the keeper, the latch being adapted to latch onto the keeper once past the keeper in filter unit supporting relation on the support structure, and reversely deflecting the latch 54 by actuating flange 110 and simultaneously deflecting adjacent and coupled latches sharing the tether 112 to disengage the filter unit from the support structure.

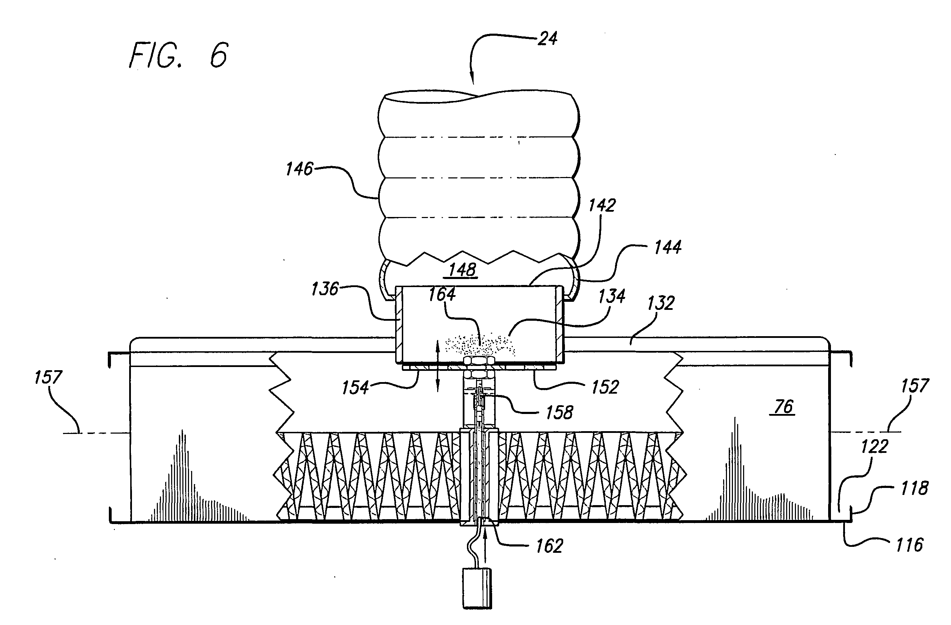

With reference now to Figs. 5A, 5B and 6, the invention also provides an apparatus for and method of testing high efficiency particulate air filtering media in a filter unit mounted in a clean room including introducing a test material into a rod at a rod inlet at the down stream side of the media, and releasing the test material onto the upstream side of the media at a rod outlet, while passing air from the upstream side to the downstream side of the media.

In this embodiment, with reference to Figs, 5A and 5B, the filter units 28 and supports 30 are much like those previously described, modified as follows: The filter units 28 are typically separate units but can be in an array where the receiver 36 is one of several in a grid pattern as shown in Fig. 1. The filter units 28 have multiple filter media packs 34a, 34b that are separated by a divider 114 and sealed into the frame 32. A bracket 115 surmounts the divider 114 and carries a bushing 158. The filter unit 28 further includes an upper cover 132 fixed to the frame sides 76 - 84. The upper cover 132 has a central opening 134 surrounded by a collar 136. The pressurized air supply 24 to the filter unit 28 communicates with air inlet 142 formed by the outlet 144 of flexible conduit 146. The conduit opening 148 registers with the inlet collar 136 and is secured thereto in fluid tight relation.

A damper 152 comprising a perforated plate 154 controls the inflow of air from conduit 146. A vertically or axially shiftable rod 156 extends within a tube 155 that is fixed within divider 114. O-rings 157 seal the rod 156 in the tube 155. Rod 156 is journaled and supported by bushing 158 fixed to the bracket 115. Rod 156 carries the damper plate 154 and extends within the tube 155 in the divider 114 from the workspace W to the air inlet 142. Suitably, rod 156 is threaded to threadedly advance through threaded bushing 158 supported above the plane 157 of the filter media 34a, 34b for adjusting vertically with reference to the fixed bushing by rotation with a screwdriver or other tool acting on the workspace W-exposed lower end 162 of the rod.

Damper 152 is thus shifted more or less to collar 136 by adjustment of the rod 156 in bushing 158 to increase or decrease air flow to the filter unit 28 as needed to balance the air flow across the filter unit or among plural filter units in an array. The ability to adjust the damper 152 setting from within the workspace W is a signal advantage of this embodiment of the invention. A further feature is the integration of the damper 152 and the rod 156 into the filter unit 28 so that each replacement filter unit brings the entire assembly for convenience and lower cost.

In a further embodiment, shown specifically in Fig. 6, rod 156 is made tubular. A test material 164 such as an aerosol challenge mist of appropriately sized particles for testing a HEPA or ULPA filter efficiency is injected from supply 166 or otherwise expressed into the rod 156 from below the filter media 34a, 34b for delivery into the prefilter media airstream upstream of and on top of the filter media in the filter unit 28 from within the workspace W. Material 164 passing through the media 34 is measured to test the filter unit 28. This ability to conduct testing without having an operator go above the filter units is an important advantage of this embodiment of the invention.

## Claims

1. A clean room ceiling filter unit support system for a filter unit (28) comprising a frame (32) and filter media (34) sealed within said frame, and a filter unit support (14) adjacent said frame (32) for supporting said filter unit (28), **characterized in that** said filter unit support system (14) comprising plural sets of paired cooperating latch and keeper fasteners (42) carried by said filter unit frame (32) and said filter unit support (14) in which one cooperating fastener is a spring loaded latch (54) deflectable in pivoting relation in a plane parallel to said filter unit side by its said cooperating fastener (56, 64) and being biased against said deflection to return to an undeflected position to support said filter unit in said filter unit support after deflection.

2. The clean room ceiling filter unit support system according to claim 1, in which said one cooperating fastener (54, 56, 64) is reversely deflectable from outside said filter unit support system to disengage from said support system.

3. The clean room ceiling filter unit support system according to claim 1, in which said filter unit (28) has a plurality of outward facing sides (76, 78, 82, 84) at least two of said sides carrying a cooperating fastener (54, 56, 64).

4. The clean room ceiling filter unit support system according to claim 3, in which at least two of the filter unit frame outward facing sides (76, 78, 82, 84) carry said one cooperating fastener (54) comprising a spring-loaded latch (54), said latch (54) including a latch shoulder (58) and inward facing support sides (86, 88, 92, 94) each carrying a second cooperating fastener (56, 64) opposite each said latch (54) comprising a keeper (64) having a pin (56) projecting normal to said filter unit support (14) and arranged to engage said latch shoulder (58) in deflecting relation, said latch (54) being hook-shaped to capture said pin (56) following said latch shoulder (58) passing said pin (56) in filter unit supporting relation on said pin (56).

5. The clean room ceiling filter unit support system according to claim 4, in which said filter unit sides (76, 78, 82, 84) carrying said latches (54) have a front face (108) normal to said sides, each said latch (54) having a second trailing shoulder (74) having a flange (110) arranged to separably engage said side front face (108) in the latched condition of said filter unit (28) in said filter unit support (14).

6. The clean room ceiling filter unit support system according to claim 5, including also a tether (112) secured to each said latch (54) for simultaneously pivoting multiple ones of said latches (54) from pin engagement by said tether (112) pivoting one said latch (54) said tether (112) being accessible from within a clean room.

7. The clean room ceiling filter unit support system according to claim 6, in which sets of said latch structures are tethered by a common tether (112) for simultaneous pivoting from pin engagement by said tether.

8. The clean room ceiling filter unit support system according to claim 7, in which said filter unit frame (32) is rectangular and has first and second pairs of outwardly facing sides (76, 78), said first and second pairs of sides having respectively first and second sets of pivoting latches (541, 542) mounted thereon in longitudinally distributed relation, said filter unit support (14) having first and second sets of pins (561,562) mounted thereon in cooperating relation with said first and second sets of latches (541, 542), first and second tethers (1121, 1122) separately connecting the members of said first and second sets of latches (541, 542) respectively for pivoting together each of the latches (541, 542) within each set in pin (56) separating relation responsive to the pivoting of one latch (54) within the set.

9. The clean room ceiling filter unit support system according to claim 7, in which said filter unit support structure sides have an external U-shaped flange (116) comprising a stub wall (118) extending parallel to said structure side and spaced therefrom across a gap (122), said pin (56) being supported in place by said structure side to project into the interior of said support structure.

10. The clean room ceiling filter unit support system according to claim 9, in which said filter unit supported latch (54, 56, 64) comprises a latch member pivoted on said filter unit side, said latch member comprising a blade defining at one end a latch leading shoulder (58) and at the other end a flange defining a latch trailing shoulder (74), and defining a pivot locus between said ends, said latch member blade engaging said pin within said support structure interior.

11. The clean room ceiling filter unit support system according to claim 10, in which said filter unit sides have a U-shaped flange (116) opposing said support structure interior, said filter unit side flanges carrying said latches in pin (56) registered relation.

12. The clean room ceiling filter unit support system according to claim 10, including also a tether (112) connected between adjacent latches (54) for pivoting said latches (54) together from pin (56) engagement, sets of latches (54) being tethered to a common tether (112) for simultaneous pivoting from pin (56) engagement of each member of a set of latches (54) upon pivoting of any member of the set.

13. A clean room filter for a system according to claim 1 comprising a filter unit (28) for mounting in a support (14) supported by a support surface, said filter unit (28) having outwardly facing side walls (76, 78, 82, 84) and filter media (34) sealed with a frame (32), said side walls (76, 78, 82, 84) and support (14) defining self-deflecting cooperating fasteners (42) in the form of plural sets of paired cooperating latch and keeper fasteners (42) adapted to support said filter unit (28) at said support (14) and spaced from said support surface **characterized in that** one cooperating fastener is a spring loaded latch (54) deflectable in pivoting relation in a plane parallel to said filter unit side by its said cooperating fastener (56, 64) and being biased against said deflection to return to an undeflected position to support said filter unit in said filter unit support after deflection.

14. The clean room filter according to claim 13, in which one said cooperating fastener (42) is a generally hook-shaped latch (54) that is adapted to cooperate with a keeper comprising a pin (56) projecting normal to said filter unit (28), said latch (54) being constructed and arranged such that its leading shoulder (58) engages said pin (56) in deflecting relation and captures said pin (56) following said latch leading shoulder (58) passing said pin (56) in filter unit (28) supporting relation on said pin (56).

## Patentansprüche

1. Stützsystem für eine Reinraumdeckenfiltereinheit für eine Filtereinheit (28), umfassend einen Rahmen (32) und innerhalb des Rahmens dichtsitzende Filtermedien (34) und einen zu dem Rahmen benachbarten Träger (32) für die Filtereinheit (14) zum Stützen der Filtereinheit (28), **dadurch gekennzeichnet, dass** das Stützsystem für die Filtereinheit (14) eine Vielzahl von Sets paarweise zusammenwirkender Riegel und Befestigungsmittel (42), die von dem Rahmen der Filtereinheit (32) und dem Träger für die Filtereinheit (14) aufgenommen sind, umfasst, wobei eines der zusammenwirkenden Befestigungsmittel ein mit einer Sprungfeder versehener Riegel (54) ist, der in Bezug auf eine zu der Seite der Filtereinheit parallelen Ebene durch sein zusammenwirkendes Befestigungsmittel (56, 64) schwenkbar auslenkbar ist und gegen diese Auslenkung vorgespannt ist, um nach Auslenkung zum Stützen der Filtereinheit in dem Träger für die Filtereinheit in eine nicht ausgelenkte Position zurückzukehren.

2. Stützsystem für die Reinraumdeckenfiltereinheit nach Anspruch 1, wobei das eine zusammenwirkende Befestigungsmittel (54, 56, 64) von außerhalb des Stützsystems für die Filtereinheit in umgekehrter Richtung auslenkbar ist, um sich aus dem Stützsystem zu lösen.

3. Stützsystem für die Reinraumdeckenfiltereinheit nach Anspruch 1, wobei die Filtereinheit (28) eine Vielzahl von nach außen weisenden Seiten (76, 78, 82, 84) hat, von denen zumindest zwei Seiten ein zusammenwirkendes Befestigungsmittel (54, 56, 64) tragen.

4. Stützsystem für die Reinraumdeckenfiltereinheit nach Anspruch 3, wobei zumindest zwei der nach außen weisenden Seiten (76, 78, 82, 84) des Rahmens der Filtereinheit das eine zusammenwirkende Befestigungsmittel (54) tragen, das einen mit einer Sprungfeder versehenden Riegel (54) umfasst, wobei der Riegel (54) eine Riegelschulter (58) und nach innen weisende Stützseiten (86, 88, 92, 94) umfasst, von denen jede ein zweites zusammenwirkendes Befestigungsmittel (56, 64) gegenüber jedes Riegels (54) trägt, das einen Anker (64) mit einem Stift (56) umfasst, der senkrecht zu dem Träger der Filtereinheit (14) vorragt und der angeordnet ist, um mit der Riegelschulter (58) in ausgelenkter Stellung in Eingriff zu kommen, wobei der Riegel (54) hakenförmig ist, um den Stift (56) zu fassen, nachdem die Riegelschulter (58) den Stift (56) in einer die Filtereinheit stützenden Stellung den Stift (56) passiert hat.

5. Stützsystem für die Reinraumdeckenfiltereinheit nach Anspruch 4, wobei die Seiten der Filtereinheit (76, 78, 82, 84), die die Riegel (54) tragen, eine Vorderseite (108) senkrecht zu den Seiten aufweisen, wobei jeder Riegel (54) eine zweite Längsschulter (74) mit einer Kante (110) aufweist, die angeordnet ist, um separat mit der Vorderseite (108) in der verriegelten Stellung der Filtereinheit (28) in dem Träger für die Filtereinheit (14) in Eingriff zu treten.

6. Stützsystem für die Reinraumdeckenfiltereinheit nach Anspruch 5, wobei auch ein Spannseil (112) umfasst ist, das an jedem Riegel (54) befestigt ist, um gleichzeitig mehrere der Riegel (54) aus dem Eingriff mit dem Stift durch Spannseil (112), das einen Riegel (54) ausschwenkt, auszuschwenken, wobei das Spannseil (112) von dem Reinraum aus zugänglich ist.

7. Stützsystem für die Reinraumdeckenfiltereinheit nach Anspruch 6, wobei die Sets der Riegelformen durch ein gemeinsames Spannseil (112) verbunden sind, um gleichzeitig aus dem Eingriff mit dem Stift durch das Spannseil auszuschwenken.

8. Stützsystem für die Reinraumdeckenfiltereinheit nach Anspruch 7, wobei der Rahmen der Filtereinheit (32) rechteckig ist und erste und zweite Paare nach außen weisender Seiten (76, 78) aufweist, wobei die ersten und zweiten Seitenpaare jeweils erste und zweite Sets von schwenkbaren Riegeln (541, 542) aufweisen, die in longitudinaler Verteilung daran befestigt sind, wobei der Träger für die Filtereinheit (14) erste und zweite Sets von Stiften (561, 562) aufweist, die in einer zusammenwirkenden Beziehung mit den ersten und zweiten Riegelsets (541, 542) angeordnet sind, wobei die ersten und zweiten Spannseile (1121, 1122) die Glieder der ersten und zweiten Riegelsets (541, 542) separat verbinden, um entsprechend zusammen jeden der Riegel (541, 542) jedes Sets auf eine diesen von dem Stift (56) trennenden Weise auszuschwenken, die eine Reaktion auf das Ausschwenken eines der Riegel (54) des Sets ist.

9. Stützsystem für die Reinraumdeckenfiltereinheit nach Anspruch 7, wobei die Seiten der Stützstruktur für die Filtereinheit eine äußere U-förmige Kante (116) aufweisen, die einen Wandbefestigungskante (118) umfasst, die sich parallel zu der Strukturseite und davon beabstandet über eine Lücke (122) erstreckt, wobei der Stift (56) an der Stelle durch die Seite der Struktur gestützt wird, so dass sie in das Innere der Stützstruktur vorsteht.

10. Stützsystem für die Reinraumdeckenfiltereinheit nach Anspruch 9, wobei der durch die Filtereinheit gestützte Riegel (54, 56, 64) ein Riegelglied umfasst, das auf der Seite der Filtereinheit drehbar gelagert ist, wobei das Riegelglied einen Schenkel, der an einem Ende eine Riegelführungsschulter (58) definiert, und an dem anderen Ende eine Kante umfasst, die eine Riegellängsschulter (74) definiert und wobei eine Schwenkkurve zwischen den Enden definiert wird, wobei der Schenkel des Riegelglieds mit dem Stift im Inneren der Stützstruktur in Eingriff tritt.

11. Stützsystem für die Reinraumdeckenfiltereinheit nach Anspruch 10, wobei die Seiten der Filtereinheit eine U-förmige Kante (116) aufweisen, die dem Inneren der Stützstruktur gegenüber liegt, wobei die Kanten der Seite der Filtereinheit die Riegel in einer mit dem Stift (56) eingerasteten Verbindung tragen.

12. Stützsystem für die Reinraumdeckenfiltereinheit nach Anspruch 10, wobei auch ein Spannseil (112) umfasst ist, das zwischen benachbarten Riegeln (54) verbunden ist, um die Riegel (54) zusammen aus dem Eingriff mit dem Stift (56) auszuschwenken, wobei Riegelsets (54) an einem gemeinsamen Spannseil (112) angebunden sind, um gleichzeitig jedes Glied eines Sets von Riegeln (54) aus dem Eingriff mit einem Stift (56) durch Ausschwenken irgendeines der Glieder aus der Gruppe auszuschwenken.

13. Reinraumfilter für ein System nach Anspruch 1, umfassend eine Filtereinheit (28) zur Montage an einem Träger (14), der durch eine Stützoberfläche gestützt wird, wobei die Filtereinheit (28) nach außen weisende Seitenwände (76, 78, 82, 84) und Filtermedien (34) aufweist, die mit einem Rahmen (32) abgedichtet sind, wobei die Seitenwände (76, 78, 82, 84) und der Träger (14) selbst auslenkbare zusammen- wirkende Befestigungsmittel (42) in Form einer Vielzahl von Sets paarweise zusammenwirkender Riegel- und Befestigungsmittel (42) bestimmen, die geeignet sind, um die Filtereinheit (28) an dem Träger (14) zu stützen und die von der Stützoberfläche beabstandet sind, **dadurch gekennzeichnet, dass** eines der zusammenwirkenden Befestigungsmittel ein mit einer Sprungfeder versehener Riegel (54) ist, der in Bezug auf eine zu der Seite der Filtereinheit parallelen Ebene durch sein zusammenwirkendes Befestigungsmittel (56, 64) schwenkbar auslenkbar ist und gegen diese Auslenkung vorgespannt ist, um nach Auslenkung zum Stützen der Filtereinheit in dem Träger für die Filtereinheit in eine nicht ausgelenkte Position zurückzukehren.

14. Reinraumfilter nach Anspruch 13, wobei eines der zusammenwirkenden Befestigungsmittel (42) ein im Wesentlichen hakenförmiger Riegel (54) ist, der geeignet ist, um mit einem Anker, der einen senkrecht zu der Filtereinheit (28) vorstehenden Stift (56) umfasst, zusammenzuwirken, wobei der Riegel (54) derart konstruiert und angeordnet ist, dass seine Führungsschulter (58) mit dem Stift (56) in ausgelenkter Stellung in Eingriff kommt und den Stift (56) fasst, nachdem die Riegelführungsschulter (58) den Stift (56) in der die Filtereinheit (28) stützenden Stellung an dem Stift (56) passiert hat.

## Revendications

1. Système de support d'unité filtrante de plafond de salle blanche destiné à une unité filtrante (28) comprenant un cadre (32) et un moyen filtrant (34) enfermé hermétiquement à l'intérieur dudit cadre, et un support d'unité filtrante (14) adjacent audit cadre (32) destiné à supporter ladite unité filtrante (28), **caractérisé en ce que** ledit système de support d'unité filtrante (14) comprenant de multiples ensembles de dispositifs de fixation appariés à verrou et gâche (42) opérant conjointement portés par ledit cadre d'unité filtrante (32) et ledit support d'unité filtrante (14) dans lesquels un dispositif de fixation opérant conjointement est un verrou à ressort (54) pouvant être fait dévier en relation pivotante dans un plan parallèle audit côté de l'unité filtrante par son dit dispositif de fixation opérant conjointement (56, 64) et étant rappelé par rapport à ladite déviation pour revenir vers une position non déviée pour supporter ladite unité filtrante dans ledit support d'unité filtrante après déviation.

2. Système de support d'unité filtrante de plafond de salle blanche selon la revendication 1, dans lequel ledit un dispositif de fixation opérant conjointement (54, 56, 64) peut être fait dévié de façon réversible à partir de l'extérieur dudit système de support d'unité filtrante pour se désengager d'avec ledit système de support.

3. Système de support d'unité filtrante de plafond de salle blanche selon la revendication 1, dans lequel ladite unité filtrante (28) comporte une pluralité de côtés faisant face vers l'extérieur (76, 78, 82, 84), au moins deux desdits côtés portant un dispositif de fixation opérant conjointement (54, 56, 64).

4. Système de support d'unité filtrante de plafond de salle blanche selon la revendication 3, dans lequel au moins deux desdits côtés faisant face vers l'extérieur (76, 78, 82, 84) du cadre d'unité filtrante portent ledit un dispositif de fixation opérant conjointement (54) comprenant un verrou à ressort (54), ledit verrou (54) incluant un épaulement (58) et les côtés du support faisant face vers l'intérieur (86, 88, 92, 94) portant un deuxième dispositif de fixation opérant conjointement (56, 64) opposé à chaque dit verrou (54) comprenant une gâche (64) comportant une broche (56) faisant saillie selon une orientation normale audit support d'unité filtrante (14) et agencée pour s'engager avec ledit épaulement de verrou (58) en une relation de déviation, ledit verrou (54) étant en forme de crochet pour saisir ladite broche (56) à la suite de ce que ledit épaulement de verrou (58) passe ladite broche (56) en relation de support de l'unité filtrante sur ladite broche (56).

5. Système de support d'unité filtrante de plafond de salle blanche selon la revendication 4, dans lequel lesdits côtés de l'unité filtrante (76, 78, 82, 84) portant lesdits verrous (54) présentent une face frontale (108) normale auxdits côtés, chaque dit verrou (54) comportant un second épaulement entraîné (74) comportant un rebord (110) agencé pour s'engager séparément avec ladite face frontale de côté (108) en l'état verrouillé de ladite unité filtrante (28) se trouvant dans ledit support d'unité filtrante (14).

6. Système de support d'unité filtrante de plafond de salle blanche selon la revendication 5, incluant aussi un lien (112) assujetti à chaque dit verrou (54) destiné à faire pivoter simultanément de multiples verrous desdits verrous (54) à partir de l'engagement avec les gâches par ledit lien (112) en faisant pivoter l'un desdits verrous (54) ledit lien (112) étant accessible à partir de l'intérieur de la salle blanche.

7. Système de support d'unité filtrante de plafond de salle blanche selon la revendication 6, dans lequel les ensembles desdites structures de verrou sont reliés par un lien commun (112) pour un pivotement simultané à partir de l'engagement avec les broches, par ledit lien.

8. Système de support d'unité filtrante de plafond de salle blanche selon la revendication 7, dans lequel ledit cadre d'unité filtrante (32) est rectangulaire et comporte une première et une deuxième paires de côtés faisant face vers l'extérieur (76, 78), lesdites première et deuxième paires de côtés comportant respectivement un premier et un deuxième ensemble de verrous pivotants (541, 542) montés sur ceux-ci en une relation distribuée longitudinalement, ledit support d'unité filtrante (14) comportant un premier et un deuxième ensembles de broches (561, 562) montées sur celui-ci en relation d'opération conjointe avec lesdits premier et deuxième ensembles de verrous (541, 542), un premier et un deuxième liens (1121, 1122) raccordant séparément respectivement les éléments desdits premier et deuxième ensembles de verrous (541, 542) pour faire pivoter ensemble chacun des verrous (541, 542) au sein de chaque ensemble en relation de séparation de broche (56) en réponse au pivotement d'un verrou (54) au sein de l'ensemble.

9. Système de support d'unité filtrante de plafond de salle blanche selon la revendication 7, dans lequel lesdits côtés de structure de support de l'unité filtrante comportent un rebord en forme de U (116) comprenant une paroi de talon (118) s'étendant parallèlement audit côté de structure et espacée de celui-ci à travers un intervalle (122), ladite broche (56) étant supportée en place par ledit côté de structure pour faire saillie dans l'intérieur de ladite structure de support.

10. Système de support d'unité filtrante de plafond de salle blanche selon la revendication 9, dans lequel le verrou supporté d'unité filtrante (54, 56, 64) comprend un élément de verrou fait pivoter sur ledit côté d'unité filtrante, ledit élément de verrou comprenant une lame définissant à une extrémité un épaulement de conduite de verrou (58) et à l'autre extrémité un rebord définissant un épaulement entraîné de verrou (74), et définissant un lieu de pivotement entre les dites extrémités, ladite lame élément de verrou s'engageant avec ladite broche au sein dudit intérieur de structure de support.

11. Système de support d'unité filtrante de plafond de salle blanche selon la revendication 10, dans lequel lesdits côtés de l'unité filtrante comportent un rebord en forme de U (116) opposé audit intérieur de structure de support, lesdits rebords de côté de l'unité filtrante portant lesdits verrous en relation de repérage par rapport aux broches (56)

12. Système de support d'unité filtrante de plafond de salle blanche selon la revendication 10, incluant aussi un lien (112) raccordé entre les verrous adjacents (54) pour faire pivoter lesdits verrous (54) ensemble d'avec l'engagement de broche (56), les ensembles de verrous (54) étant reliés à un lien commun (112) pour un pivotement simultané à partir de l'engagement avec la broche (56) de chaque élément d'un ensemble de verrous (54) suite à un pivotement de n'importe quel élément de l'ensemble.

13. Filtre de salle blanche destiné à un système selon la revendication 1 comprenant une unité filtrante (28) destiné à un montage dans un support (14) supporté par une surface support, ladite unité filtrante (28) comportant des parois latérales faisant face vers l'extérieur (76, 78, 82, 84) et un moyen filtrant (34) enfermé hermétiquement avec un cadre (32), lesdits parois latérales (76, 78, 82, 84) et support (14) définissant des dispositifs de fixation (42) opérant conjointement à auto-déviation sous la forme de multiples ensembles de dispositifs de fixation (42) appariés à verrou et gâche opérant conjointement adaptés pour supporter ladite unité filtrante (28) au niveau dudit support (14) et espacé de ladite surface support, **caractérisé en ce qu'**un dispositif de fixation opérant conjointement est un verrou à ressort (54) pouvant être fait dévier en relation pivotante dans un plan parallèle audit côté de l'unité filtrante de son dit dispositif de fixation opérant conjointement (56, 64) et étant rappelé par rapport à ladite déviation pour revenir vers une position non déviée pour supporter ladite unité filtrante dans ledit support d'unité filtrante après déviation.

14. Filtre de salle blanche selon la revendication 14, dans lequel un dit dispositif de fixation (42) opérant conjointement est un verrou (54) globalement en forme de crochet qui est adapté pour opérer conjointement avec une gâche comprenant une broche (56) faisant saillie selon une orientation normale à ladite unité filtrante (28), ledit verrou (54) étant construit et agencé de telle sorte que son épaulement de conduite (58) s'engage avec ladite broche (56) en relation de déviation et saisit ladite broche (56) à la suite de ce que ledit épaulement de verrou (58) passe ladite broche (56) en relation de support de l'unité filtrante sur ladite broche (56).
